# DEMANDE DE BREVET EUROPEEN

(11) **EP 1 971 081 A1**
(43) Date de publication de la demande: **17.09.2008**
(21) Numéro de dépôt: 08102245.1
(22) Date de dépôt: 04.03.2008
(51) Int. Cl.: H04L 12/28, H04Q 7/32

(54) **Terminal téléphonique mobile bi-mode capable d'inhiber automatiquement et completement l'émission radio de son interface destinée à un réseau de télécommunication global sans fil**

(30) Priorité: 15.03.2007 FR 0753844
(71) Demandeur: Alcatel Lucent, 75008 Paris (FR)
(72) Inventeur: Gass, Raymond, 67150, BOLSENHEIM (FR)
(74) Mandataire: Sciaux, Edmond

(57) **Abrégé**

Ce terminal téléphonique mobile bi-mode (T) comporte une première interface (GI) destinée à le connecter à un réseau de télécommunication global sans fil (PLMN), une seconde interface (WI) destinée à le connecter à un réseau de télécommunication local sans fil (WLAN), et une unité de commande (CU) pour recevoir, de la seconde interface (Wl) un signal (S1) indiquant que ce terminal est connecté à un réseau de télécommunication local sans fil (WLAN), et alors envoyer à la première interface (Gl) un signal de commande (S2) apte à inhiber complètement l'émission radio de cette première interface (GI).

## Description

L'invention concerne un terminal téléphonique mobile dit bi-mode parce qu'il peut fonctionner alternativement dans deux réseaux de télécommunication sans fil : un réseau de télécommunication global sans fil, de type GSM par exemple, et un réseau de télécommunication local sans fil, de type Wifi ou Bluetooth par exemple.

Un terminal de téléphonie mobile bi-mode dispose de deux interfaces radio, permettant respectivement de connecter ce terminal respectivement à un réseau de télécommunication global sans fil, et/ou à un réseau de télécommunication local sans fil, ce dernier étant intégré généralement à un réseau privé : réseau d'une entreprise, d'un hôpital, d'un aéroport, etc. Le réseau global offre une couverture à l'échelle d'un pays mais les communications sont coûteuses. Le réseau local offre une couverture plus restreinte, incluse dans la couverture précédente, mais les communications du type voix sur protocole Internet (VoIP, Voice over IP) sont peu coûteuses. L'utilisation de ce réseau local doit être privilégiée pour les communications téléphoniques, en raison de son faible coût. On connaît des procédés permettant de transférer automatiquement une communication téléphonique d'un réseau de télécommunication global sans fil, à un réseau de télécommunication local sans fil, et vice versa, lorsque le terminal bi-mode mobile entre ou sort de la zone de couverture radio du réseau local.

L'invention concerne un terminal bimode plus particulièrement adapté pour une utilisation dans les hôpitaux. En général, l'utilisation des terminaux de téléphonie mobile aptes à se connecter à un réseau de télécommunication global sans fil est interdite dans les hôpitaux car le rayonnement radioélectrique de ces appareils peut avoir une puissance suffisante pour perturber des appareils électroniques médicaux. Par contre, l'utilisation des terminaux de téléphonie mobile aptes à se connecter à un réseau de télécommunication local sans fil est autorisée car le rayonnement radioélectrique de ces appareils a une puissance beaucoup plus faible.

Certains employés d'un hôpital peuvent être munis de terminaux téléphoniques mobiles bi-modes. Ces employés utilisent un réseau de télécommunication global sans fil quand ils sont hors de l'hôpital, par exemple pendant des déplacements chez des patients, et ils utilisent un réseau de télécommunication local sans fil, quand ils sont dans l'hôpital.

Pour éviter toute émission radioélectrique par l'interface radio destinée au réseau de télécommunication global sans fil, il est nécessaire d'inhiber complètement cette interface. Si elle est seulement mise en veille, elle émet de temps en temps des données de signalisation, malgré l'absence de communication téléphonique. Ceci n'est pas admissible dans un hôpital. Sur un terminal bi-mode classique, cette opération d'inhibition complète est faite manuellement par l'utilisateur, chaque fois qu'il entre dans les locaux d'un hôpital. Il est souhaitable d'automatiser cette opération d'inhibition pour les employés des hôpitaux utilisant un terminal bi-mode.

On connaît des procédés permettant de transférer automatiquement une communication téléphonique d'un réseau de télécommunication global sans fil, à un réseau de télécommunication local sans fil, lorsque le terminal bi-mode mobile entre dans la zone de couverture radio du réseau local. L'inconvénient de ces procédés est qu'ils n'inhibent pas complètement l'interface radio destinée au réseau de télécommunication global sans fil. Cette interface reste en veille, par conséquent elle émet de temps en temps des données de signalisation, ce qui n'est pas admissible dans un hôpital.

Le document US 2005/0107077 décrit une borne qui peut être installée dans un hôpital notamment et qui comporte des moyens pour établir une liaison, de type Wifi par exemple, avec un terminal bi-mode Wifi - GSM par exemple, pour lui envoyer l'ordre d'inhiber complètement l'interface radio permettant de le connecter au réseau de télécommunication global sans fil, c'est à dire l'interface de type GSM. L'inconvénient de ce système est de nécessiter une modification du réseau local considéré (L'installation de bornes qui émettent un ordre spécifique), ce qui entraîne des coûts d'installation.

Le document DE 198 33777 décrit aussi une borne qui comporte des moyens pour établir une liaison, de type DECT, avec un terminal bi-mode DECT - GSM. Le terminal bimode a une interface pour se connecter à un réseau DECT prédéterminé, et des moyens pour détecter un message prédéterminé émis ensuite par ce réseau DECT, et pour éteindre alors complètement la partie GSM. L'inconvénient de ce système est de nécessiter une modification du réseau local considéré (Les bornes DECT doivent émettre un message spécifique pour cette commande), ce qui entraîne des coûts d'installation.

Le document US 2007/0191069 décrit un terminal qui comporte de moyens pour détecter qu'il entre dans la zone de couverture d'un réseau local sans fil quelconque. Il affiche alors sur son écran un message qui propose à l'utilisateur d'arrêter complètement l'interface GSM du terminal. C'est l'utilisateur qui décide s'il est opportun de le faire ou non.

Ce système a pour avantage qu'il ne nécessite pas de modifier un réseau local sans fil déjà existant ; et que le terminal n'a pas besoin de droit d'accès prédéterminés, et n'a pas besoin de recevoir un message prédéterminé émis par ce réseau local.

Un premier inconvénient est que l'utilisateur doit faire une manipulation pour lire le message et pour y répondre. D'autre part, si l'utilisateur passe près d'un café ou magasin équipé d'un réseau local sans fil détectable par le terminal, ce dernier alerte l'utilisateur de la même façon que s'il entrait dans un hôpital. L'utilisateur est donc alerté inutilement dans de nombreux cas.

Le but de l'invention est de proposer un terminal qui permette d'inhiber complètement son interface radio destinée au réseau de télécommunication global sans fil, sans nécessiter un équipement supplémentaire dans le réseau local, et sans nécessiter une intervention de l'utilisateur.

L'objet de l'invention est un terminal téléphonique mobile bi-mode, comportant :
- une première interface destinée à le connecter à un réseau de télécommunication global sans fil, cette première interface comportant des moyens aptes à inhiber complètement l'émission radio de cette première interface lorsqu'elle reçoit un signal de commande ;
- et une seconde interface destinée à le connecter à un réseau de télécommunication local sans fil ;
ce terminal étant caractérisé en ce que la seconde interface comporte des moyens pour fournir un signal si et seulement si ce terminal est connecté à un réseau de télécommunication local sans fil prédéterminé,
et en ce qu'il comporte des moyens de commande pour recevoir ce signal et alors envoyer à la première interface un signal de commande apte à inhiber complètement l'émission radio de cette première interface.

Le terminal ainsi caractérisé permet d'inhiber complètement son interface radio destinée au réseau de télécommunication global sans fil, sans nécessiter un équipement supplémentaire dans le réseau local, et sans nécessiter une intervention de l'utilisateur, car c'est le fait de reconnaître un réseau prédéterminé et seulement ce réseau prédéterminé, qui commande l'inhibition de l'émission radio de son interface radio destinée au réseau de télécommunication global sans fil.

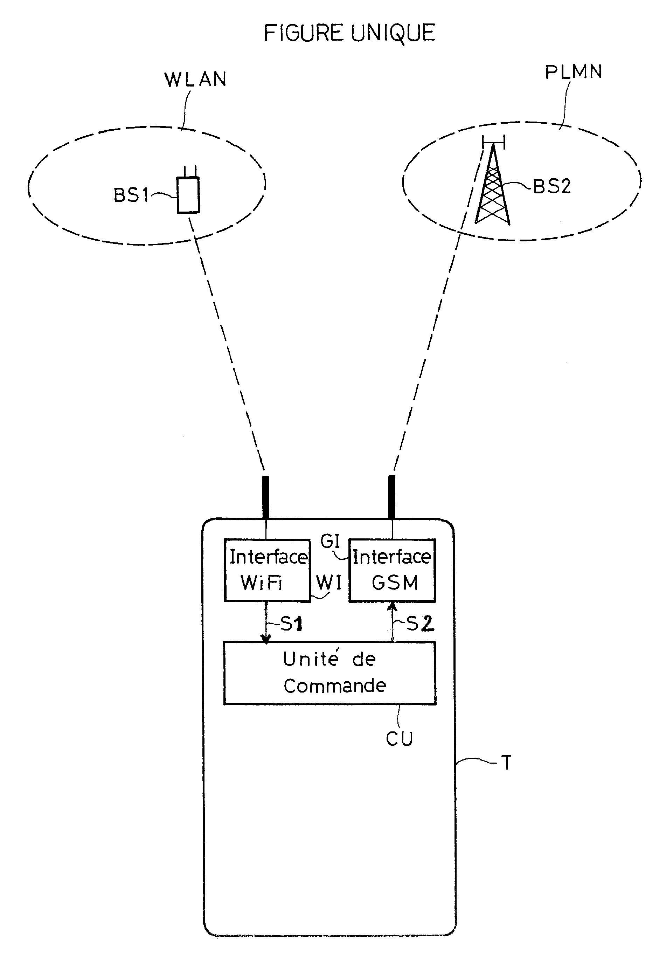

L'invention sera mieux comprise et d'autres caractéristiques apparaîtront à l'aide de la description ci-dessous et de la figure unique l'accompagnant. Cette figure représente un exemple de réalisation T du terminal bimode selon l'invention, et illustre son fonctionnement au moment où il entre dans la zone de couverture radio d'un réseau de télécommunication local sans fil, WLAN, de type Wifi par exemple, alors qu'il est en outre dans la zone de couverture radio d'un réseau de télécommunication global sans fil, PLMN, de type GSM par exemple. Le réseau WLAN appartient à un hôpital par exemple, et le terminal T est utilisé par un membre du personnel de l'hôpital. Le terminal T est configuré (Avec l'identité du réseau WLAN, et la clé d'authentification et de chiffrement propre à ce réseau) pour avoir le droit de se connecter au réseau WLAN. Ce terminal T comporte des moyens classiques qui lui permettent de se connecter automatiquement au réseau WLAN sitôt que ce terminal est dans la zone de couverture radio du réseau WLAN.

Ce terminal téléphonique mobile bi-mode T comporte :
- Une interface GI de type GSM.
- Une interface Wl de type Wifi.
- Une unité de commande CU reliée aux interfaces WI et GI.

Lorsque le terminal T entre dans la zone de couverture radio du réseau local sans fil WLAN, il est reconnu comme ayant un droit d'accès à ce réseau WLAN, et il se connecte automatiquement à ce réseau WLAN, via un point d'accès radio BS1, de manière classique. L'interface WI envoie alors à l'unité de commande CU un signal S1 indiquant que ce terminal T est connecté à un réseau de télécommunication local. L'unité de commande CU envoie alors à l'interface interface GI un signal de commande S2 apte à inhiber complètement l'émission radio de cette interface GI.

L'utilisateur n'a donc pas besoin d'intervenir pour que l'émission radio de cette interface GI soit inhibée complètement quand l'utilisateur entre dans l'hôpital.

Il est à remarquer aussi qu'aucune modification n'est nécessaire dans l'installation du réseau WLAN déjà existant dans l'hôpital.

Inversement, quand le terminal T sort de la zone de couverture radio du réseau local sans fil WLAN, l'interface WI cesse d'envoyer à l'unité de commande CU le signal S1 indiquant que ce terminal T est connecté à un réseau de télécommunication local. L'unité de commande CU cesse alors d'envoyer à l'interface interface GI le signal de commande S2 apte à inhiber complètement l'émission radio de cette interface GI. L'interface GI peut alors émettre des signaux radio pour connecter le terminal T au réseau PLMN, de manière classique.

Bien entendu, la portée de l'invention ne se limite pas aux terminaux bi-modes GSM/Wifi. Elle peut être adaptée pour des réseaux globaux d'autres types, UMTS par exemple, et pour des réseaux locaux d'autres types, Bluetooth par exemple. Le terminal selon l'invention peut être utilisé dans tout autre lieu où il existe une couverture radio d'un réseau de télécommunication local sans fil, et où il n'est pas admissible de laisser fonctionner une interface radio apte à se connecter à un réseau global sans fil.

## Revendications

1. Terminal téléphonique mobile bi-mode, comportant :
- une première interface (GI) destinée à le connecter à un réseau de télécommunication global sans fil (PLMN), cette première interface comportant des moyens aptes à inhiber complètement l'émission radio de cette première interface (GI) lorsqu'elle reçoit un signal de commande ;
- et une seconde interface (WI) destinée à le connecter à un réseau de télécommunication local sans fil (WLAN) ;
**caractérisé en ce que** la seconde interface (WI) comporte des moyens pour fournir un signal (S1) si et seulement si ce terminal est connecté à un réseau de télécommunication local sans fil (WLAN) prédéterminé,
et **en ce qu'**il comporte des moyens de commande (CU) pour recevoir ce signal (S1) et alors envoyer à la première interface (GI) un signal de commande (S2) apte à inhiber complètement l'émission radio de cette première interface (GI).

## Revendications modifiées

### Revendications modifiées conformément à la règle 137(2) CBE.

**1.** Terminal téléphonique mobile bi-mode, comportant :
- une première interface (GI) destinée à le connecter à un réseau de télécommunication global sans fil (PLMN), cette première interface comportant des moyens aptes à inhiber complètement l'émission radio de cette première interface (GI) lorsqu'elle reçoit un signal de commande d'inhibition (S2);
- et une seconde interface (WI) destinée à le connecter à un réseau de télécommunication local sans fil (WLAN), cette seconde interface comportant des moyens pour fournir un second signal (S1) si et seulement si ce terminal est connecté à un réseau de télécommunication local sans fil (WLAN);
**caractérisé en ce que** les moyens pour fournir un second signal (S1) comportent des moyens pour fournir ce second signal (S1) si et seulement si ce terminal est connecté à un réseau de télécommunication local sans fil (WLAN) prédéterminé,
et **en ce qu'**il comporte des moyens de commande (CU) pour recevoir ce second signal (S1) et envoyer alors à la première interface (GI) un signal de commande d'inhibition (S2).
